# EUROPEAN PATENT APPLICATION

(11) **EP 1 906 612 A1**
(43) Date of publication of application: **02.04.2008**
(21) Application number: 06020182.9
(22) Date of filing: 26.09.2006
(51) Int. Cl.: H04L 29/06

(54) **Roaming support in stationary WiMAX networks**

(71) Applicant: Nokia Siemens Networks GmbH & Co. KG, 81541 München (DE)
(72) Inventor: Premec, Domagoj, 10010 Zagreb (HR); Riegel, Maximilian, 90409 Nürnberg (DE)

(57) **Abstract**

The invention provides for roaming support in stationary WiMAX networks. To this purpose, the network is provided with a home agent (HA) and a foreign agent (FA), which are preferably co-located in one unit (FA/HA). A roaming mobile station that supports Mobile IP (MIP) can be attached to the network as follows. After performing an access authentication procedure and establishing a connection between the mobile station (MS) and the network, a MIP agent advertisement message (MIP Adv(CoA)) is sent from the foreign agent (FA) to the mobile station (MS). Then a registration with the home agent (HA) is performed.

## Description

The invention relates to a method for attaching a MIP-enabled mobile station (MS) to a stationary WiMAX network, a network access server, and a stationary WiMAX network.

Recent network research and development has spawned a number of technologies that will compete for market shares in the mobile network sector. In addition to UMTS other technologies such as WLAN, WiMAX, and WiFi are tested or deployed for various mobile applications. A likely candidate for market success is WiMAX due to the expectation of high bandwidth at low cost.

Broadband WiMAX solutions are based on IEEE 802.16 technology. Present deployments of WiMAX are based on the IEEE 802.16a standard. The IEEE 802.16e standard is to extend WiMAX capabilities to provide full mobility support (such as the implementation of handover mechanisms) for mobile users.

WiMAX seems to converge on mobile IP as the basic concept for mobility support. Mobile IP aims to enable the attachment of a node to different networks without change of IP address.

IP Mobility Support for IPv4 (IP version 4) is outlined in RFC 3344 (request for comments 3344). According to RFC 3344 a mobile node is always identified by its home address, regardless of its current position of attachment to the Internet. While situated away from its home (in a visited network), a mobile node is also associated with a care-of address, which provides information about its current point of attachment to the Internet. The care-of address is registered with a home agent charged with sending packets destined for the mobile node to the care-of address.

While RFC 3344 assumes a home agent to be present in the home network for forwarding traffic to the visited network WiMAX allows for dynamic assignment of a home agent (usually in the visited network). As put forward in RFC 2794 a NAI (network access identity) can be employed for identifying a mobile node with a visited network. The NAI is included in the registration message. After registration with the foreign agent a home agent is assigned. As a result, the mobile node can send traffic via the visited network. Traffic can also be received after the IP address (care-of address) has been learnt by forwarding tables. Similar mobility mechanism have been defined for IPv6 (IP version 6), e.g. in RFC 3775.

Recently, the WiMAX Forum has seen a growing interest among its members, mostly telecom operators, for stationary WiMAX networks. It seems that today there is a significant number of operators that whish to start using the WiMAX technology by deploying it in a stationary network. There is an initiative within the WiMAX Forum to provide the necessary standardization work so as to enable the interoperable usage of stationary WiMAX networks. This initiative is often called EUM, which stands for Extended Usage Model.

Even if handover is not supported, the movement of a subscriber is still possible, but at the cost of a lost sessions. A terminal may be used at a place covered by a network different from its home network. Then it is supposed to detach from the network, move to a different place and there perform a new attachment to the network (this is so called "nomadic" behavior). Below, the term roaming is also used for the provision of connectivity service at a location that is different from the home location where the service was registered.

Current stationary WiMAX networks do not provide their subscribers with this kind of mobility service. The roaming mobile WiMAX terminal may enter the coverage area of a stationary WiMAX network different from the home network and may try to attach to it. From the technical point of view, attachment of a roaming mobile WiMAX terminal to a stationary WiMAX network will go just fine up to the point where the IP configuration according to the Mobile IP registration procedure is supposed to happen. (Of course, proper roaming contracts between the operator of a stationary network and the operator of the subscriber's home network are prerequisite.) As there is no proper support for completing the IP configuration in current WiMAX networks the attachment will fail.

The objective of the invention is to provide for roaming support in stationary WiMAX Network.

According to the present invention mobility management in stationary networks is provided so as to enable mobile stations to attach to foreign networks. The attachment procedure employs Mobile IP (MIP) for this purpose, i.e. the attaching mobile station is assumed to comprise a MIP protocol stack. Most to-date terminals would support Mobile IPv4 (IP version 4), e.g. via a client Mobile IPv4 stack. The invention is not limited to this case but may be also applied with other MIP protocols such as Mobile IPv6 (IP version 6).

Below the terms home network or home domain and foreign network or foreign domain will be used in relation to a mobile station. The network where the station is originally registered is called home network. A further network which is capable to service to the mobile station is called foreign network. Alternatively, the terms visited network or local network (if it is clear from the context that the home network is not local) are used for foreign network. The terms network and domain are used interchangeably. (The term "domain" is commonly found in RFCs.)

According to the invention, a stationary WiMAX network is enhanced with mobility management comprising a foreign agent and a home agent. Preferably, foreign agent and home agent are co-located so as to centralize mobility management functions. Thus, a new entity (below also referred to as CMIP MM - Client Mobile IP Mobility Management), which combines the functions of the foreign agent and home agent in the same network node, may be created. With this embodiment, no relaying of the MIP Registration Request message by the foreign agent to the home agent is required. In fact, there are no messages exchanged between the foreign agent and home agent, since the CMIP MM combines both, foreign agent and home agent, in a single box.

The mobility management may for instance be integrated in a network access server (NAS). This NAS may form part of a WiMAX Access Serving Network Gateway (ASN-GW).

The attachment of a mobile station to a foreign network works as follows:

Upon authentication with the network a connection is set up. (For the authentication step an authentication authority of the mobile station's home network may be involved.) Thereupon a MIP agent advertisement message is sent from the foreign agent to the mobile station and a registration with the home agent is performed. After completion of the attachment the mobile station may access services offered by the foreign network, e.g. Internet connection.

According to an embodiment of the invention, it is established during authentication whether the mobile station is assigned to a different network different from the ocal network (i.e. the mobile station is roaming). A criterion for this is provided by whether and which information is sent in conjunction with the network access identifier (NAI). From such a decorated NAI the network can derive whether the mobile station belongs to a roaming subscriber or a permanent subscriber. The MIP agent advertisement message is sent only if it was found that the mobile station is assigned to a different home network.

The present invention allows roaming WiMAX terminal to attach to stationary WiMAX networks. Thus, enlarged service coverage is offered to nomadic subscribers. Network operator can draw additional revenue from roaming terminals.

Below an embodiment of the invention is described with reference to figures. The figures show
Fig. 1: a stationary network reference model with support for roaming WiMAX subscribers, and
Fig. 2: a flowchart of an attachment of a roaming mobile station to a stationary WiMAX network.

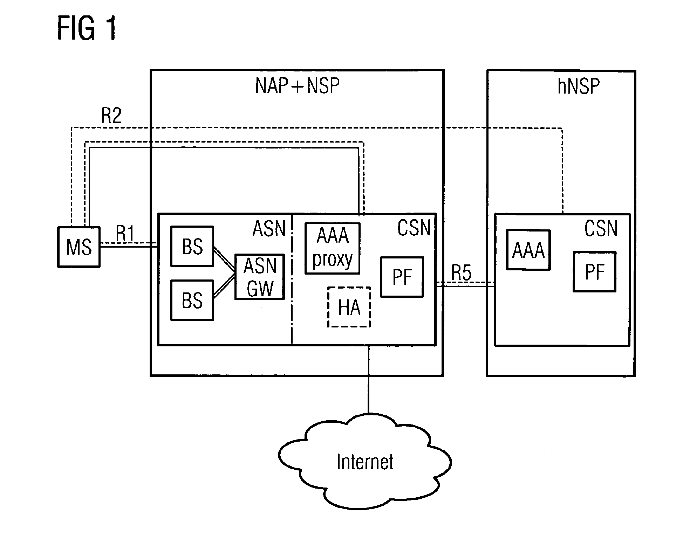

Fig. 1 shows a WiMAX mobile station MS. This mobile station MS is to be attached to a WiMAX foreign domain (network) comprising a WiMAX Access Serving Network ASN and a WiMAX Connectivity Serving Network CSN. The reference point or interface between the Access Serving Network ASN and the mobile station MS is as usual referred to as R5. The reference point R2 refers to the interface between the mobile station and the Connectivity Serving Network CSN of the home network hNSP (home WiMAX Network Service Provider). The Access Serving Network ASN comprises base stations BS, which are connected to an ASN-Gateway ASN-GW. This ASN-Gateway ASN-GW typically comprises a network access server (often the acronym NAS is used) and functions such as radio resource management and key distribution.

The Connectivity Serving Networks CSN each comprise an AAA proxy (Authentication, Authorization and Accounting proxy) and a policy function PF. A home agent HA is indicated in the Connectivity Serving Network CSN of the foreign network. Upon attachment to the foreign network the mobile station MS can access the Internet.

So as to enable stationary WiMAX networks to support the attachment of foreign mobile stations, i.e. to support roaming, a foreign agent is provided. Preferably, this foreign agent is co-located with a home agent. With this solution, there is no tunneling of MS traffic between the foreign agent FA and home agent HA (no encapsulation/decapsulation needed, no overhead of tunnel headers).

Both, foreign agent and home agent can be placed at the NAS (Network Access Server) of the ASN-Gateway ASN-GW. The functional entity formed by co-locating foreign agent and home agent provides the mobility support for roaming CMIP (Client Mobile IP) mobile stations. Hence, this functional entity is also referred to as CMIP Mobility Manager.

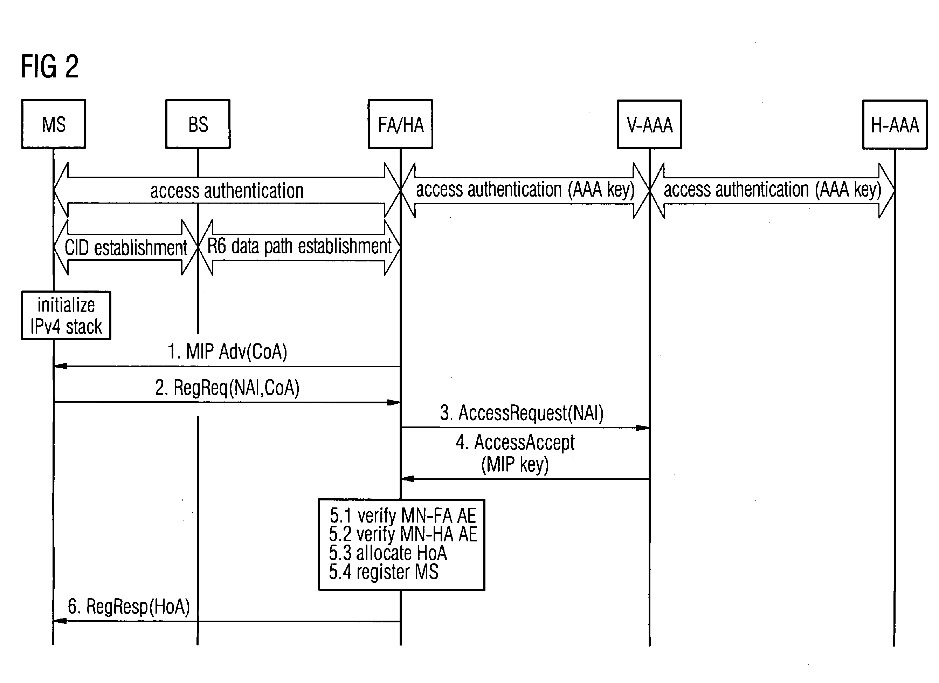

Fig. 2 shows an attachment procedure to the foreign network, which is carried through by help of a co-located foreign agent/home agent unit FA/HA, by which the CMIP Mobility Manager is implemented. The functional entities shown in Fig. 2 are located in the visited network with the sole exception of the AAA server H-AAA.

The authentication can be performed in the same way as for non-stationary WiMAX networks. Details about such a procedure can be found in the draft WiMAX NWG Stage 2, "WiMAX End-to-End Network System Architecture" or RFC 3957 and the references therein. However, the employment of a CMIP Mobility management node comprises foreign agent and home agent goes beyond what is described in the above references. This CMIP MM node verifies and generates both MN-FA and MN-HA authentication extensions.

Typically, a foreign agent, an AAA (Authentication, Authorization and Accounting) entity in the foreign domain and an AAA entity in the home domain are involved in the authentication procedure. These AAA entities usually are AAA servers located in the respective domain or network and represented by the reference signs V-AAA (AAA server of the visited network) and H-AAA (AAA server of the home network)

in Fig. 2. For authentication with a foreign (or visited) network a mobile station provides credentials (such as keys). These credentials are relayed via a foreign agent to the local AAA server V-AAA. This AAA entity is expected to be configured with sufficient information to negotiate the verification of mobile station credentials with the home network AAA server H-AAA. In Fig. 2 the respective authentication steps are referred to as "access authentication (AAA key)". Once the credentials have been verified by the home AAA server H-AAA the home AAA server V-AAA and (via V-AAA) are informed about the successful authentication.

After successful authentication a data path is established between the base station BS connected which the mobile station connects to and the FA/HA unit. Also, a connection is set up between the mobile station MS and the responsible base station (air link). In line with the IEEE 802.16 standards this connection is assigned a Connection Identifier CID.

So as to enable the mobile station to access the Internet (or more generally further IP networks) via the foreign (local) network the mobile IP (MIP) framework is used. An IP stack is initialized by the mobile station MS (e.g. IP version 4 - IPv4). A MIP message Adv(CoA) is sent from the foreign agent FA to the mobile station MS. Via this message the applicable care-of-address is advertised. This step is not performed by state-of-the-art stationary WiMAX networks. State-of-the-art stationary WiMAX networks do not support roaming. Hence, messaging in the context of Mobile IP is not provided for.

Upon assignment of the care-of-address CoA the mobile station is registered with the foreign network. To this purpose, a message is sent from the mobile station to the FA/HA unit to request registration. This message RegReq(NAI,CoA) comprises a network access identity NAI and the care-of-address CoA. When the CMIP MM receives the MIP Registration Request, it will first verify the MN-FA authentication extension, if one is present. A regular foreign agentFA, e.g. in a non-stationary WiMAX network, would then relay the message to the home agent HA. As the foreign FA and home agent HA are co-located in the same entity (CMIP MM), there is no need for relaying the message. The CMIP MM will also verify the MN-HA authentication extension. In order to verify authentication extensions, the CMIP MM needs to know a corresponding key. The CMIP MM may come into possession of this key during the authentication step (since it is also performing the role of authenticator). An alternative way, shown in steps 3 and 4 of fig. 2, is that the CMIP MM requests the key from the V-AAA server.

According to fig. 2 the mobility management FA/HA sends a message AccessRequest(NAI) including the network access identity NAI to the local AAA server V-AAA to request access permission. The acceptance is communicated to the FA/HA via a message AccessAccept(MIP key) including a Mobile IP key. Upon reception of this message the FA/HA unit performs following steps:
- verification of the MN-FA authentication extension
- verification of the MN-HA authentication extension
- allocation of a home address (usually from the address space of the subnet where the mobility management FA/HA is located, i.e. a topologically correct address for the subnet where the CMIP Mobility Management is located)
- registration of the mobile station MS with the CMIP mobility management, i.e. creation of a binding cache entry for the MS

These steps form part of the standard Mobile IP procedures. Details can be found in the above cited WiMAX NWG draft, RFC 3344, RFC 3957 and the references therein. Finally, a response to the registration request is transmitted from the mobility management unit FA/HA to the mobile station MS. This message RegResp(HoA) comprises the assigned home address HoA and the address of the home agent HA. The HA address is an address of the CMIP Mobility Management unit, because the CMIP MM is also assuming the role of the home agent HA. Since the care-of-address CoA is also the address of the CMIP MM, it turns out that care-of-address CoA and the HA address may be identical. However, this may confuse the MS (although, a proper MIPv4 stack implementation on a mobile node should work just fine with the CoA same as the HA address), so it is recommended that the CMIP MM has two addresses, preferably from different subnets: one to be used as a care-of-address CoA advertised in the MIP agent advertisement, and the other one to be used as the HA address. The CMIP MM will also need to protect the MIP Registration.Response message by generating and including in the message the proper authentication extensions (MN-FA, which is optional, and the MN-HA, which is mandatory).

From that point on, the mobile station MS is registered with the home agent HA, and it may start the IP traffic. The uplink traffic will be delivered to the CMIP MM, which will route it directly towards the final destination. There is no tunneling to the home agent HA because the CMIP Mobility management coincides with the mobility agents HA and FA. The downlink traffic will reach the subnet of the CMIP MM (since HoA is topologically correct for this subnet) where it will be intercepted by the CMIP MM and delivered to the MS over an R6 data path.

There are no provisions in this contribution for the MIPv4 handover support, since the stationary WiMAX network would not support the link layer handover anyway.

## Claims

1. A method for attaching a MIP-enabled mobile station (MS) to a stationary WiMAX network, comprising the steps of
- providing a foreign agent (FA) and a home agent (HA) in the network,
- performing an access authentication procedure wherein the mobile station (MS) is authenticated with the network,
- establishing a connection between the mobile station (MS) and the network,
- sending a MIP agent advertisement message (MIP Adv(CoA))from the foreign agent (FA) to the mobile station (MS), and
- performing a registration with the home agent (HA).

2. The method of claim 1, further comprising
- providing for a central MIP mobility management (FA/HA) in the network by co-locating foreign agent (FA) and home agent (HA).

3. The method of claim 2, **characterized in that** the mobility management (HA/FA) forms part of a network access server.

4. The method according to one of the preceding claims,
**characterized in that**
- establishing during the authentication whether the mobile station (MS) is assigned to a different home network, and
- sending the MIP agent advertisement message (MIP Adv(CoA)) only if it was established that the mobile station (MS) is assigned to a different home network.

5. The method of claim 4,
further including
- using information transmitted in conjunction with a network access identifier to establish whether the mobile station (MS) is assigned to a different home network.

6. A network access server comprising a MIP mobility management unit (FA/HA) with a foreign agent (FA) and a home agent (HA) function for a central mobility management in a stationary WiMAX network.

7. A WiMAX Access Serving Network-Gateway (ASN-GW) comprising the network access server of claim 6.

8. A stationary WiMAX network adapted for supporting the attachment of MIP-enabled mobile stations (MS) according to one of the claims 1 to 5.
